# FASCICULE DE BREVET EUROPEEN

(11) **EP 1 152 203 B1**
(45) Date de publication et mention de la délivrance du brevet: **17.11.2004**
(21) Numéro de dépôt: 01400847.8
(22) Date de dépôt: 03.04.2001
(51) Int. Cl.: F25D 29/00, F25D 3/10

(54) **Procédé et dispositif de contrôle et de commande d'injection de fluide réfrigérant dans une enceinte de malaxage**
Verfahren und Vorrichtung zur Überwachung und Steuerung der Einspritzung von flüssigem Kältemittel in einer Mischkammer
Method and device for monitoring and controlling the injection of liquid refrigerant in a mixing chamber

(30) Priorité: 03.05.2000 FR 0005643
(43) Date de publication de la demande: 07.11.2001
(73) Titulaire: L'AIR LIQUIDE, S.A. à Directoire et Conseil de Surveillance pour l'Etude et l'Exploitation des Procédés Georges Claude, 75321 Paris Cedex 07 (FR)
(72) Inventeur: Servel, Séverine, 75008 Paris (FR); Buil, José, 94260 Fresnes (FR); Flamant, Hervé, 93600 Aulnay-Sous-Bois (FR)
(74) Mandataire: Mellul-Bendelac, Sylvie Lisette

(56) Documents cités:
- EP-A- 0 583 692
- FR-A- 2 485 950
- FR-A- 2 532 821
- FR-A- 2 713 321
- FR-A- 2 736 423

## Description

La présente invention se rapporte aux systèmes de refroidissement destinés à réfrigérer ou à maintenir en température des produits subissant une opération de malaxage à l'intérieur d'une enceinte.

L'invention vise plus particulièrement un procédé de contrôle et de commande d'injection de fluide réfrigérant dans une enceinte de malaxage équipée d'un organe de malaxage, le fluide étant injecté par au moins un organe d'injection actionnable à ouverture/fermeture débouchant dans une région inférieure de l'enceinte, et étant extrait d'une région supérieure de l'enceinte via une conduite d'extraction, et une machine de malaxage selon le préambule de la revendication 7.

Un tel procédé et une telle machine sont décrits dans le document FR-A-2 532 821.

Généralement, dans les systèmes de refroidissement connus, on injecte à la base de l'enceinte de malaxage du CO₂ liquide sous pression qui se transforme par détente en neige carbonique et en gaz, la neige étant malaxée avec le produit contenu dans l'enceinte, et le gaz étant extrait de la partie supérieure de l'enceinte après échange thermique avec le produit à malaxer.

Un tel dispositif a été décrit par exemple dans la demande de brevet français FR-A-2 734 624.

On connaît également des enceintes de malaxage refroidies par le haut, le document FR-2 485 950 en illustre un exemple. Dans ce document, le procédé de refroidissement est contrôlé par une sonde de température mesurant la température au sein de la masse de viande traitée.

La difficulté qui se pose dans un système d'injection dans la partie inférieure de l'enceinte, consiste à réguler la température du produit malaxé tout au long de l'opération de malaxage, et à commander l'injection du fluide réfrigérant dans l'enceinte. Plusieurs solutions ont déjà été proposées qui ne donnent pas entière satisfaction :
- Le prélèvement manuel par un opérateur d'un échantillon à l'intérieur de l'enceinte, suivi du contrôle manuel de la température de l'échantillon. L'opérateur injecte ensuite manuellement du fluide cryogénique en fonction de la température qu'il a mesurée. Outre le fait que ces opérations manuelles sont longues, la mesure de température est peu précise et l'évaluation de la quantité de fluide cryogénique à injecter est empirique. Il peut en découler un mauvais rendement frigorifique de l'opération de refroidissement, et par conséquent une surconsommation de fluide réfrigérant, mais encore une altération du produit par apport frigorifique brutal.
- Le contrôle de la température par une ou plusieurs sondes disposées dans l'enceinte. Les systèmes les plus évolués fonctionnant sur ce principe comportent plusieurs sondes réparties dans l'enceinte de façon à donner une température moyenne prenant en compte l'ensemble du produit. Par contre, ces sondes sont difficilement accessibles et difficilement démontables, voire, indémontables, ce qui rend leur nettoyage et leur maintenance difficiles. De plus, le montage et le positionnement initial des sondes sont complexes pour avoir une mesure représentative non perturbée par les injections.
- La commande de l'injection à partir d'une valeur ou d'une variation du couple d'entraînement de l'organe de malaxage. Un tel système fonctionne sur le principe suivant lequel la résistance au malaxage du produit est d'autant plus importante que sa température est basse, et que la consommation électrique du moteur d'entraînement de l'organe de malaxage permet d'accéder à la température du produit. Cependant, la corrélation entre la quantité d'énergie électrique consommée et la température du produit malaxé, est complexe, et difficilement exploitable.

Le but de l'invention est de remédier à ces divers inconvénients, et d'avoir une consommation optimisée de fluide avec un procédé de contrôle et de commande d'injection de fluide réfrigérant dans une enceinte de malaxage, qui soit automatique, fiable et qui mette en oeuvre des moyens de mesure facilement maintenables.

A cet effet, le procédé de contrôle et de commande d'injection de fluide réfrigérant suivant l'invention comporte les étapes de :
- mesure de la température du fluide extrait ;
- commande d'ouverture ou fermeture de l'organe d'injection, en fonction de ladite température.

Ainsi, le paramètre choisi pour commander l'injection de fluide cryogénique est la température du fluide extrait, ce qui a pour conséquence une grande simplicité de la mesure de température qui peut être en un point unique, et une corrélation à la fois simple et fiable entre la grandeur mesurée et la température du produit malaxé. Les quantités de fluide injectées sont instantanément adaptées à la « quantité de froid » que peut emmagasiner le produit, et les échanges thermiques sont optimisés.

Par exemple, l'organe d'injection est commandé à fermeture si la valeur de la température mesurée est inférieure à une valeur de seuil prédéterminée.

Plus précisément, l'invention propose un procédé de contrôle et de commande d'injection de fluide réfrigérant dans une enceinte de malaxage équipée d'un organe de malaxage, le fluide étant injecté par au moins un organe d'injection actionnable à ouverture/fermeture débouchant dans une région inférieure de l'enceinte, et étant extrait d'une région supérieure de l'enceinte via une conduite d'extraction, procédé caractérisé en ce que, sur un cycle de malaxage d'une durée prédéterminée et divisé en une pluralité de périodes élémentaires d'une durée prédéterminée, comprises chacune entre un instant initial et un instant final, on effectue les opérations suivantes à chaque instant initial :
(a) mesurer la température du fluide extrait et comparer la valeur de température ainsi obtenue avec une valeur de référence, de façon à obtenir un écart ;
(b) calculer un temps d'injection élémentaire à partir dudit écart ;
(c) commander à ouverture l'organe d'injection sur une phase élémentaire d'injection de durée égale au temps d'injection élémentaire ainsi calculé et commander à fermeture ledit organe sur le reste de la période élémentaire.

Suivant un mode de réalisation particulier de l'invention :
- on détermine préalablement un temps total d'injection de fluide réfrigérant correspondant à une quantité de fluide à injecter sur un cycle de malaxage ;
- on incrémente un compteur de temps d'injection du temps d'ouverture de l'organe d'injection après chaque temps d'injection élémentaire, qui fournit un temps cumulé d'injection ;
- on interdit l'ouverture de l'organe d'injection jusqu'à la fin du cycle de malaxage, dès que le temps cumulé d'injection atteint la valeur du temps total d'injection.

De préférence, on interdit l'ouverture de l'organe d'injection dès lors que l'organe de malaxage est inactif.

Suivant une caractéristique avantageuse de l'invention, la fin d'une phase élémentaire d'injection est séparée du début de la phase élémentaire d'injection suivante d'une phase de pause, de durée non nulle, pendant laquelle on interdit l'ouverture de l'organe d'injection.

L'invention vise également une machine de malaxage comportant les caractéristiques définies dans la revendication 7.

Avantageusement, les moyens de mesure sont disposés en dehors de l'enceinte de malaxage.

Grâce à cette disposition, les moyens de mesure sont, en dehors des zones perturbées par l'influence des injecteurs, et facilement accessibles et donc facilement démontables, en vue d'une opération de maintenance ou d'un nettoyage.

L'invention vise enfin une machine de malaxage équipé d'un dispositif de contrôle et de commande d'injection, tel que décrit précédemment.

Des exemples de réalisation de l'invention vont maintenant être décrits en regard des dessins annexés, sur lesquels :
- la Figure 1 est un schéma de fonctionnement du dispositif suivant l'invention ;
- la Figure 2 est un diagramme représentant les différentes grandeurs significatives du fonctionnement du dispositif suivant l'invention et du procédé de contrôle et de commande d'injection également objets de l'invention.

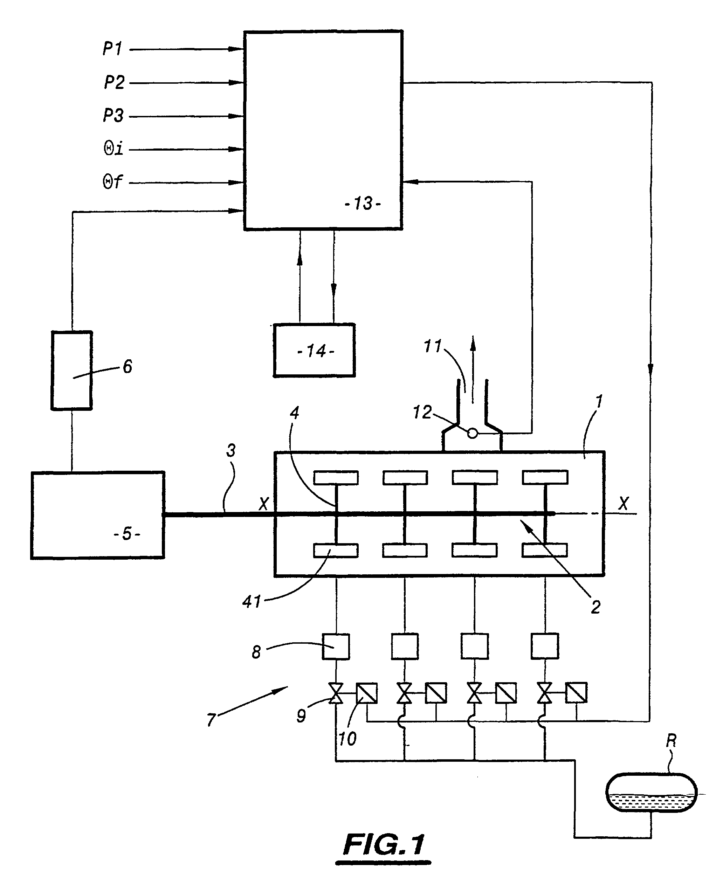

A la Figure 1, on a représenté schématiquement un dispositif de contrôle et de commande d'injection de fluide réfrigérant dans une enceinte 1 de malaxage équipée d'un organe de malaxage 2. L'enceinte de malaxage 1 est une enceinte fermée, de forme allongée, à axe général X-X sensiblement horizontal, à l'intérieur de laquelle est disposé longitudinalement un arbre 3 d'entraînement d'une série de bras rotatifs 4 munis de pales 41 (bien que les enceintes de malaxage comportent plus couramment deux arbres, on fera référence, dans toute la description, à un arbre par souci de simplification). L'arbre 3, d'axe X-X, est entraîné en rotation par un moteur électrique 5 dont la rotation est contrôlée par un organe de contrôle 6.

Le fluide réfrigérant est injecté par une série d'organes d'injection 7 constitués chacun d'un injecteur 8, d'une vanne 9 à fonctionnement électromagnétique comprenant un obturateur manoeuvré par une bobine 10. La commande de la bobine 10 actionne à ouverture et fermeture l'organe d'injection 7. Chaque organe d'injection 7 débouche dans la région inférieure de l'enceinte 1, de façon à augmenter l'efficacité du produit réfrigérant.

En effet, le fluide réfrigérant le plus communément utilisé est du CO₂ liquide (il est aussi possible d'injecter du N₂) injecté sous pression, provenant d'un réservoir R, qui se détend dans l'enceinte de malaxage 1, et passe à l'état solide sous forme de neige carbonique, et pour partie sous forme gazeuse. La neige carbonique est malaxée avec les constituants du produit à traiter, alors que le gaz issu du liquide réfrigérant ou du réchauffement de la neige carbonique traverse le produit du bas vers le haut de l'enceinte. Cela permet d'obtenir un rendement frigorifique du gaz réfrigérant plus élevé que par une injection depuis le haut de l'enceinte.

Le gaz est ensuite extrait de l'enceinte 1 via une conduite d'extraction 11 débouchant dans la région supérieure de l'enceinte 1.

Le dispositif comprend des moyens de mesure de température 12 qui mesurent la température du fluide extrait, c'est-à-dire issu du fluide réfrigérant après échange thermique avec le produit à malaxer, les moyens de mesure de température 12 étant par exemple constitués simplement d'une sonde disposée dans la conduite d'extraction 11 en dehors de l'enceinte de malaxage 1. Un signal de commande d'ouverture ou fermeture des organes d'injection 7, qui correspond à un signal électrique délivré à la bobine 10, est élaboré en fonction de la température ainsi mesurée.

La température mesurée dans la conduite d'extraction 11 dépend de la quantité de chaleur échangée entre le gaz issu du fluide réfrigérant et le produit contenu dans l'enceinte 1, entre la formation du gaz consécutivement à l'introduction du liquide réfrigérant et son extraction dans la conduite d'extraction 11. En conséquence, la température mesurée dans la conduite d'extraction 11 donne une image de la température du produit contenu dans l'enceinte, et de la quantité de froid qu'il est capable d'absorber.

Le procédé de contrôle et de commande d'injection de fluide réfrigérant qui va maintenant être décrit repose sur ce principe. Il s'applique au dispositif qui a été décrit précédemment et se fonde sur la mesure de la température du fluide extrait comme paramètre de commande d'ouverture ou de fermeture des organes d'injection 7.

On peut prévoir pour la mise en oeuvre d'un tel procédé de contrôle et de commande d'injection, que l'organe d'injection 7 est par défaut, durant une opération de malaxage, commandé à ouverture, et qu'un signal de commande de fermeture est délivré audit organe d'injection si la valeur de la température mesurée dans la conduite d'extraction 11 est inférieure à une valeur de seuil prédéterminée.

Il est cependant plus intéressant de prévoir un procédé qui consiste, sur un cycle de malaxage d'une durée Tm prédéterminée et divisé en une pluralité de périodes élémentaires d'une durée prédéterminée Te, comprises chacune entre un instant initial ti et un instant final tf, à effectuer les opérations suivantes à chaque instant initial ti:
(a) mesurer la température du fluide extrait et comparer la valeur de température Temp. ainsi obtenue avec une valeur de référence Temp.S, de façon à obtenir un écart ;
(b) calculer un temps d'injection élémentaire ton à partir dudit écart ;
(c) commander à ouverture l'organe d'injection 7 sur une phase élémentaire d'injection de durée égale au temps d'injection élémentaire ton ainsi calculé et commander à fermeture ledit organe sur le reste de la période élémentaire.

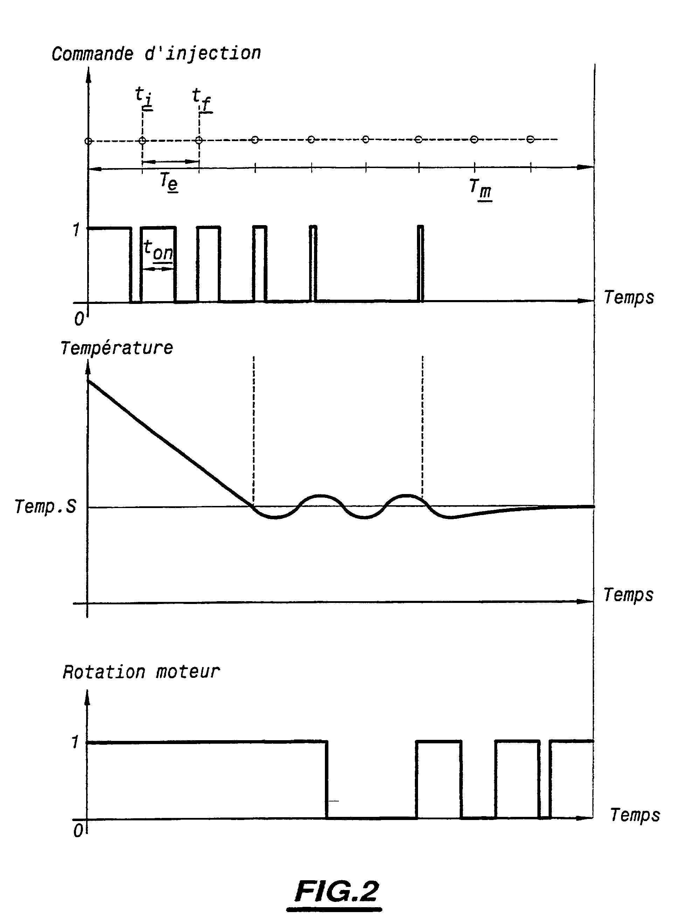

Ce mode de réalisation a été représenté à la Figure 2. Il permet d'amener la température du produit au voisinage de la température de consigne en un temps relativement court, la régulation étant effectuée en fonction d'un écart de température par rapport à une température de seuil Temp.S et non par la simple position de ladite température Temp. au-dessous ou au dessus de cette température de seuil Temp.S.

Il est par ailleurs préférable de prévoir des paramètres supplémentaires dans l'élaboration du signal de commande des organes d'injection.

En particulier, le dispositif comporte un calculateur 13 qui reçoit des signaux du capteur de température 12 et qui envoie des signaux de commande d'ouverture/fermeture aux organes 7.Ce calculateur est programmé pour calculer une durée totale d'injection de fluide réfrigérant à partir de paramètres p1, p2, p3 liés au produit à malaxer et aux caractéristiques de température initiale θi et finale θf du produit. Les paramètres liés au produit sont par exemple la masse du produit à malaxer p1, sa chaleur spécifique p2, et un éventuel taux de congélation p3 correspondant au rapport des quantités de produit congelé et de produit non congelé introduites initialement dans l'enceinte.

On détermine donc par ce biais, préalablement à l'opération de malaxage, un temps total d'injection de fluide réfrigérant correspondant à une quantité de fluide à injecter sur un cycle de malaxage complet. Cette quantité de fluide réfrigérant représente pour un rendement thermique donné, la quantité de fluide nécessaire pour faire passer le produit contenu dans l'enceinte de sa température initiale θi à sa température finale de consigne θf.

La détermination du temps total d'injection pourrait également être effectuée empiriquement par un opérateur, ce temps étant ensuite réglé par une opération manuelle.

Durant l'opération de malaxage, on incrémente un compteur 14 de temps d'injection du temps d'ouverture de l'organe d'injection ton, après chaque temps d'injection élémentaire, qui fournit un temps cumulé d'injection.

Dès que le temps cumulé d'injection atteint la valeur du temps total d'injection, ce qui signifie que la quantité théorique de fluide à injecter a été introduite dans l'enceinte, on interdit l'ouverture des organes d'injection 7 jusqu'à la fin du cycle de malaxage.

Cette condition constitue une sécurité de fonctionnement du procédé, par laquelle on évite que la température en fin d'opération de malaxage ne soit trop basse.

De même, puisque l'essentiel de l'apport de chaleur à l'intérieur de l'enceinte de malaxage 1 provient du mouvement de l'arbre 3 et des bras rotatifs 4, et pour éviter de geler les produits proches des points d'injection ou de congeler l'ensemble en cas d'arrêt prolongé, on interdit l'ouverture des organes d'injection 7 dès lors que l'organe de malaxage 2 est inactif. Pour cela, l'organe 6 de contrôle de fonctionnement du moteur 5 émet un signal significatif du fonctionnement du moteur 5 vers le calculateur 13.

Il est d'autre part très important de ménager des temps de repos durant lesquels le produit peut céder des calories, et de ne pas traumatiser le produit à malaxer par un refroidissement trop brutal, donc par un apport trop rapide et en quantité excessive de fluide cryogénique. C'est pourquoi l'on prévoit durant chaque période élémentaire une phase de pause pendant laquelle on interdit l'ouverture des organes d'injection 7. Cette phase de pause est consécutive, pour chaque période élémentaire, à la phase élémentaire d'injection.

Le dispositif et le procédé qui viennent d'être décrits, permettent une optimisation et une automatisation complète de la commande d'injection de fluide réfrigérant pendant une opération de malaxage, grâce à des moyens de mesure d'usage courant dont l'accessibilité est accrue, mais encore par des moyens d'asservissement extrêmement simples.

En outre, les aménagements sur les machines de malaxage existantes nécessaires à l'exécution de l'invention, sont mineurs.

## Revendications

1. Procédé de contrôle et de commande d'injection de fluide réfrigérant dans une enceinte de malaxage équipée d'un organe de malaxage, le fluide étant injecté par au moins un organe d'injection actionnable à ouverture/fermeture débouchant dans une région inférieure de l'enceinte, et étant extrait d'une région supérieure de l'enceinte via une conduite d'extraction, **caractérisé en ce qu'**il comporte les étapes de :
- mesure de la température du fluide extrait ;
- commande d'ouverture ou fermeture de l'organe d'injection, en fonction de ladite température.

2. Procédé de contrôle et de commande d'injection suivant la revendication 1, **caractérisé en ce que** l'organe d'injection est commandé à fermeture si la valeur de la température mesurée est inférieure à une valeur de seuil prédéterminée.

3. Procédé de contrôle et de commande d'injection de fluide réfrigérant dans une enceinte de malaxage équipée d'un organe de malaxage, le fluide étant injecté par au moins un organe d'injection actionnable à ouverture/fermeture débouchant dans une région inférieure de l'enceinte, et étant extrait d'une région supérieure de l'enceinte via une conduite d'extraction, procédé **caractérisé en ce que**, sur un cycle de malaxage d'une durée prédéterminée et divisé en une pluralité de périodes élémentaires d'une durée prédéterminée, comprises chacune entre un instant initial et un instant final, on effectue les opérations suivantes à chaque instant initial :
(a) mesurer la température du fluide extrait et comparer la valeur de température ainsi obtenue avec une valeur de référence, de façon à obtenir un écart ;
(b) calculer un temps d'injection élémentaire à partir dudit écart ;
(c) commander à ouverture l'organe d'injection sur une phase élémentaire d'injection de durée égale au temps d'injection élémentaire ainsi calculé et commander à fermeture ledit organe sur le reste de la période élémentaire.

4. Procédé de contrôle et de commande d'injection suivant la revendication 3, **caractérisé en ce que** :
- on détermine préalablement un temps total d'injection de fluide réfrigérant correspondant à une quantité de fluide à injecter sur un cycle de malaxage ;
- on incrémente un compteur de temps d'injection du temps d'ouverture de l'organe d'injection après chaque temps d'injection élémentaire, qui fournit un temps cumulé d'injection ;
- on interdit l'ouverture de l'organe d'injection jusqu'à la fin du cycle de malaxage, dès que le temps cumulé d'injection atteint la valeur du temps total d'injection.

5. Procédé de contrôle et de commande d'injection suivant l'une quelconque des revendications 1 à 4, **caractérisé en ce qu'**on interdit l'ouverture de l'organe d'injection dès lors que l'organe de malaxage est inactif.

6. Procédé de contrôle et de commande d'injection suivant l'une quelconque des revendications 3 à 5, **caractérisé en ce que** la fin d'une phase élémentaire d'injection est séparée du début de la phase élémentaire d'injection suivante d'une phase de pause, de durée non nulle, pendant laquelle on interdit l'ouverture de l'organe d'injection.

7. **Machine de malaxage,** comportant une enceinte de malaxage équipée d'un organe de malaxage, du type comprenant au moins un organe d'injection de fluide (7) réfrigérant actionnable à ouverture/fermeture débouchant dans une région inférieure de l'enceinte (1), des moyens d'extraction du fluide de l'enceinte (1) via une conduite d'extraction (11) qui débouche dans une partie supérieure de l'enceinte, et un dispositif de contrôle et commande de l'injection de fluide, dispositif comportant des moyens de mesure de température (12),
**caractérisé en ce que** lesdits moyens de mesure de température (12) mesurent la température du fluide extrait, et **en ce que** ledit dispositif comprend des moyens (13) d'émission d'un signal de commande d'ouverture ou fermeture de l'organe d'injection (7) en fonction de la valeur de température ainsi mesurée.

8. Machine de malaxage suivant la revendication 7, **caractérisé en ce que** les moyens de mesure (12) sont disposés en dehors de l'enceinte de malaxage (1).

## Patentansprüche

1. Verfahren zur Überwachung und Steuerung der Einspritzung von Kältemittel in eine Mischkammer, die mit mindestens einer Mischvorrichtung ausgestattet ist, wobei das Fluid durch mindestens eine, in einem unteren Bereich der Kammer mündende Einspritzvorrichtung, die zum Öffnen/Schließen betätigt werden kann, eingespritzt wird und aus einem oberen Bereich der Kammer über eine Abzugsleitung abgezogen wird, **dadurch gekennzeichnet, dass** es folgende Schritte umfasst:
- Messen der Temperatur des abgezogenen Fluids;
- Steuerung des Öffnens bzw. Schließens der Einspritzvorrichtung in Abhängigkeit von der Temperatur.

2. Verfahren zur Überwachung und Steuerung der Einspritzung nach Anspruch 1, **dadurch gekennzeichnet, dass** die Einspritzvorrichtung zum Schließen gesteuert wird, wenn der gemessene Temperaturwert unter einem bestimmten Schwellenwert liegt.

3. Verfahren zur Überwachung und Steuerung der Einspritzung von Kältemittel in eine Mischkammer, die mit einer Mischvorrichtung ausgestattet ist, wobei das Fluid durch mindestens eine, in einem unteren Bereich der Kammer mündende Einspritzvorrichtung, die zum Öffnen/Schließen betätigt werden kann, eingespritzt wird und aus einem oberen Bereich der Kammer über eine Abzugsleitung abgezogen wird, **dadurch gekennzeichnet, dass** während eines Mischzyklus von vorbestimmter Dauer, der in mehrere elementare Perioden von vorbestimmter Dauer unterteilt ist, die jeweils zwischen einem Anfangsmoment und einem Endmoment liegen, folgende Operationen im Anschluss an jedes Anfangsmoment ausgeführt werden:
a) Messen der Temperatur des abgezogenen Fluids und Vergleichen des so erhaltenen Temperaturwerts mit einem Referenzwert, um eine Differenz zu ermitteln;
b) Berechnen einer elementaren Einspritzzeit anhand dieser Differenz;
c) Steuerung des Öffnens der Einspritzvorrichtung bei einer elementaren Einspritzphase von gleicher Dauer wie die so berechnete elementare Einspritzzeit und Steuerung des Schließens der Vorrichtung für den Rest der elementaren Periode.

4. Verfahren zur Überwachung und Steuerung der Einspritzung nach Anspruch 3, **dadurch gekennzeichnet, dass**:
- man vorher eine Gesamteinspritzzeit des Kältemittels entsprechend einer während eines Mischzyklus einzuspritzenden Fluidmenge bestimmt;
- man einen Zähler der Einspritzzeit nach jeder elementaren Einspritzzeit, die eine kumulierte Einspritzzeit ergibt, um die Öffnungszeit der Einspritzvorrichtung erhöht;
- man das Öffnen der Einspritzvorrichtung bis zum Ende des Mischzyklus verhindert, sobald die kumulierte Einspritzzeit den Wert der Gesamteinspritzzeit erreicht.

5. Verfahren zur Überwachung und Steuerung der Einspritzung nach einem der Ansprüche 1 bis 4, **dadurch gekennzeichnet, dass** man das Öffnen der Einspritzvorrichtung verhindert, sobald die Mischvorrichtung inaktiv ist.

6. Verfahren zur Überwachung und Steuerung der Einspritzung nach einem der Ansprüche 3 bis 5, **dadurch gekennzeichnet, dass** das Ende einer elementaren Einspritzphase vom Beginn der folgenden elementaren Einspritzphase um eine Pausenphase getrennt ist, deren Dauer nicht Null ist und während der man das Öffnen der Einspritzvorrichtung verhindert.

7. Mischmaschine, die eine Mischkammer, ausgestattet mit einer Mischvorrichtung der Art, die mindestens eine, in einem unteren Bereich der Kammer (1) mündende Einspritzvorrichtung für Kältemittel (7), die zum Öffnen/Schließen betätigt werden kann, aufweist, Mittel zum Abziehen des Fluids aus der Kammer (1) über eine Abzugsleitung (11), die in einem oberen Bereich der Kammer mündet, und eine Vorrichtung zur Überwachung und Steuerung der Flüssigkeitseinspritzung umfasst, wobei die Vorrichtung Temperaturmessmittel (12) umfasst, **dadurch gekennzeichnet, dass** die Temperaturmessmittel (12) die Temperatur der abgezogenen Flüssigkeit messen und dass die Vorrichtung Mittel (13) zum Ausgeben eines Steuersignals zum Öffnen bzw. Schließen der Einspritzvorrichtung (7) in Abhängigkeit von dem Wert der so gemessenen Temperatur umfasst.

8. Mischmaschine nach Anspruch 7, **dadurch gekennzeichnet, dass** die Messmittel (12) außerhalb der Mischkammer (1) angeordnet sind.

## Claims

1. Method for controlling and commanding the injection of cooling fluid into a mixing chamber equipped with a mixing member, the fluid being injected by at least one injection member that can be made to open/close and that opens into a lower region of the chamber, and extracted from an upper region of the chamber via an extraction pipe, **characterized in that** it comprises the steps of:
- measuring the temperature of the extracted fluid;
- making the injection member open or close according to the said temperature.

2. Method for controlling and commanding injection according to Claim 1, **characterized in that** the injection member is made to close if the value of the measured temperature is below a predetermined threshold value.

3. Method for controlling and commanding the injection of cooling fluid into a mixing chamber equipped with a mixing member, the fluid being injected by at least one injection member that can be made to open/close and that opens into a lower region of the chamber, and extracted from an upper region of the chamber via an extraction pipe, the method being **characterized in that**, in a mixing cycle of predetermined duration and split into a number of elemental periods of predetermined duration, each included between an initial instant and a final instant, the following operations are performed at each initial instant:
(a) the temperature of the extracted fluid is measured and the temperature value thus obtained compared with a reference value so as to obtain a difference;
(b) the elemental injection time is calculated on the basis of the said difference;
(c) the injection member is made to open for an elemental injection phase of a duration equal to the elemental injection time thus calculated and the said member is made to close for the remainder of the elemental period.

4. Method for controlling and commanding injection according to Claim 3, **characterized in that**:
- a total cooling-fluid injection time corresponding to an amount of fluid that is to be injected over the course of the mixing cycle is determined in advance;
- an injection-time counter is incremented by the time that the injection member is open after each elemental injection time, thus providing a cumulative injection time;
- as soon as the cumulative injection time reaches the value of the total injection time, the injection member is prevented from opening up to the end of the mixing cycle.

5. Method for controlling and commanding injection according to any one of Claims 1 to 4, **characterized in that** the injection member is prevented from opening as soon as the mixing member is inactive.

6. Method for controlling and commanding injection according to any one of Claims 3 to 5, **characterized in that** the end of one elemental injection phase is separated from the start of the next elemental injection phase by a pause phase of non-zero duration, during which the injection member is prevented from opening.

7. Mixing machine, comprising a mixing chamber equipped with a mixing member, of the type comprising at least one cooling fluid-injection member (7) which can be made to open/close and which opens into a lower region of the chamber (1), means for extracting the fluid from the chamber (1) via an extraction pipe (11) which opens into an upper part of the chamber, and a device for controlling and commanding the injection of fluid, the said device comprising means (12) for measuring temperature,
**characterized in that** the said temperature-measuring means (12) measure the temperature of the extracted fluid and **in that** the said device comprises means (13) for emitting a signal to command the opening or closure of the injection member (7) according to the temperature value thus measured.

8. Mixing machine according to Claim 7, **characterized in that** the measuring means (12) are located outside the mixing chamber (1).
